# EUROPEAN PATENT APPLICATION

(11) **EP 2 455 609 A2**
(43) Date of publication of application: **23.05.2012**
(21) Application number: 11158370.4
(22) Date of filing: 16.03.2011
(51) Int. Cl.: F03D 1/06

(54) **Blade for wind power generation and wind turbine**

(30) Priority: 22.11.2010 JP 2010260196
(71) Applicant: Mitsubishi Plastics, Inc., Tokyo 103-0021 (JP); Sumitomo Corporation, Tokyo 104-8610 (JP); Fraunhofer-Gesellschaft zur Förderung der angewandten Forschung e.V., 80686 München (DE)
(72) Inventor: Nakagoshi, Akira, Chuo-ku Tokyo 103-0021 (JP); Hirano, Mitsuhiro, Chuo-ku Tokyo 104-8610 (JP); Moll, Hans-Georg, 27572, Bremerhaven (DE); Wessels, Stefan, 27572, Bremerhaven (DE); Wingerde, Arnoldus Van, 27572, Bremerhaven (DE); Vorpahl, Fabian, 27572, Bremerhaven (DE); Sayer, Florian, 27572, Bremerhaven (DE)
(74) Representative: Grünecker, Kinkeldey, Stockmair & Schwanhäusser

(57) **Abstract**

The present invention suppresses deformation of a blade for wind power generation to enable an increase in the size of the blade for wind power generation. A blade 5 used in a wind turbine 1 includes a root 11, a blade main body 12 that receives wind to obtain a rotary force, three webs 13 provided inside the blade main body 12, and girders 14 that connect the webs 13 and the blade main body 12. The blade main body 12 includes a front side outer skin 12a and a rear side outer skin 12b that are divided between an upstream side and a downstream side and face each other, a nose portion 12c disposed at a front end portion in the direction of rotation of the front side outer skin 12a and the rear side outer skin 12b, and a tail portion 12d disposed at a rear end portion in the direction of rotation of the front side outer skin 12a and the rear side outer skin 12b. The root 11, front side outer skin 12a, rear side outer skin 12b, and webs 13 are formed with a PAN-based carbon fiber composite. The nose portion 12c, tail portion 12d, and girders 14 are formed with a pitch-based carbon fiber composite.

## Description

### BACKGROUND OF THE INVENTION

### Field of the Invention

The present invention relates to a blade for wind power generation that is used in wind power generation, and a wind turbine that uses the blade for wind power generation.

### Related Background Art

Currently, the sizes of blades for wind power generation (hereunder, may be referred to as "blade") are being increased to achieve high output from wind turbines. When using a large-sized blade, damage or deformation of the blade that accompanies wind resistance or rotation is prevented by providing a reinforcing material inside the blade (for example, see Japanese Patent Laid-Open No. 2002-357176). In this connection, it has been disclosed by the National Renewable Energy Laboratory (NREL) in the USA that an output of 5 MW is obtained by a wind turbine that uses three blades that have a maximum blade length of 60 meters.

SUMMARY OF THE INVENTION

Recently, the concept of an offshore wind turbine in which a wind turbine is installed on the ocean is been studied. According to this concept, the application of carbon fiber is being examined in order to increase the size of a blade for wind power generation used by the wind turbine.

However, there is the problem that when a blade that has a blade length that exceeds the assumptions of the NREL is used, a deformation that occurs in the front-to-rear direction of the blade or a deformation that occurs in the direction of rotation of the blade becomes excessive, and hence it is not possible to meet the demands of this situation by merely using carbon fiber only.

An object of the present invention is to provide a blade for wind power generation that makes it possible to increase the size of a blade for wind power generation by suppressing deformations of a blade for wind power generation, as well as a wind turbine that uses the blade for wind power generation.

A blade for wind power generation according to the present invention is attachable to a rotor hub, and includes a wing-shaped outer skin, a plurality of webs that are provided inside the outer skin and extend towards a tip of the blade, a pair of girders that are adhered to both edges of the webs and are adhered to the outer skin, a nose portion provided at a front end portion in a direction of rotation of the outer skin, and a tail portion provided at a rear end portion in the direction of rotation of the outer skin, wherein the girders, nose portion, and tail portion are formed with a pitch-based carbon fiber composite that is obtained by impregnating a resin into a pitch-based carbon fiber.

According to the present invention, by forming girders, a nose portion and a tail portion with a pitch-based carbon fiber composite having a high modulus, even if a strong external force acts on the outer skin and the web, a joined state of the outer skin and the web can be maintained. It is thus possible to suppress deformation of the blade for wind power generation. In particular, by using a pitch-based carbon fiber for the girders, a deformation that occurs in the front-to-rear direction of the blade for wind power generation can be suppressed, and by using a pitch-based carbon fiber for the nose portion and tail portion, a deformation that occurs in the direction of rotation of the blade for wind power generation can be suppressed. As the result of being able to suppress deformation of the blade for wind power generation in this manner, the size of the blade for wind power generation can be increased. Hence, it is possible to construct a wind turbine so as to have a high output.

Preferably, the outer skin and web are formed with a PAN-based carbon fiber composite that is obtained by impregnating a resin into a PAN-based carbon fiber. By forming the outer skin and web with a high-strength PAN-based carbon fiber in this manner, the strength of the blade for wind power generation can be improved.

Further, the outer skin and web are preferably formed with a glass fiber composite that is obtained by impregnating a resin into a glass fiber. By forming the outer skin and web with a high-strength glass fiber in this manner, the strength of the blade for wind power generation can be improved.

A wind turbine according to the present invention uses any of the above described blades for wind power generation. Since it is thereby possible to increase the size of the blade for wind power generation, the wind turbine can be designed to have a high output.

According to the present invention, it is possible to suppress deformation of a blade for wind power generation and increase the size of the blade for wind power generation.

### BRIEF DESCRIPTION OF THE DRAWINGS

FIG. 1 is an outline configuration diagram that illustrates a wind turbine that uses a blade according to the embodiments;
FIG. 2 is a partial enlarged view that shows the wind turbine illustrated in FIG. 1 when viewed from an upstream side;
FIG. 3 is a plane view of the blade;
FIG. 4 is a cross-sectional view along line IV-IV shown in FIG. 3;
FIG. 5 includes views for describing the dimensions of the blade, in which (a) is a plane view of the blade that corresponds to FIG. 3, and (b) is a cross-sectional view of the blade that corresponds to FIG. 4;
FIG. 6 is a cross-sectional view of the main body of another blade;
FIG. 7 is a cross-sectional view of the main body of another blade;
FIG. 8 includes views that show simulation results of Example 1, in which (a) shows displacements in the X-axis direction (direction of rotation), and (b) shows displacements in the Y-axis direction (front-to-rear direction);
FIG. 9 includes views that show simulation results of Example 2, in which (a) shows displacements in the X-axis direction (direction of rotation), and (b) shows displacements in the Y-axis direction (front-to-rear direction); and
FIG. 10 includes views that show simulation results of Comparative Example 1, in which (a) shows displacements in the X-axis direction (direction of rotation), and (b) shows displacements in the Y-axis direction (front-to-rear direction).

### DESCRIPTION OF THE PREFERRED EMBODIMENTS

Hereunder, preferred embodiments of the blade for wind power generation and the wind turbine according to the present invention are described in detail referring to the drawings. The embodiments describe a case in which the present invention is applied to a large-sized blade that has a blade length of 90 meters. In the embodiments, a direction in which wind flows with respect to the blade for wind power generation is referred to as the "front-to-rear direction", an upstream side of wind at the blade for wind power generation is referred to as the "front side", and a downstream side of wind at the blade for wind power generation is referred to as the "rear side". Further, in the embodiments, a direction in which the blade for wind power generation rotates is referred to as the "direction of rotation". In this connection, portions that are the same or corresponding in the embodiments are denoted by the same reference numbers.

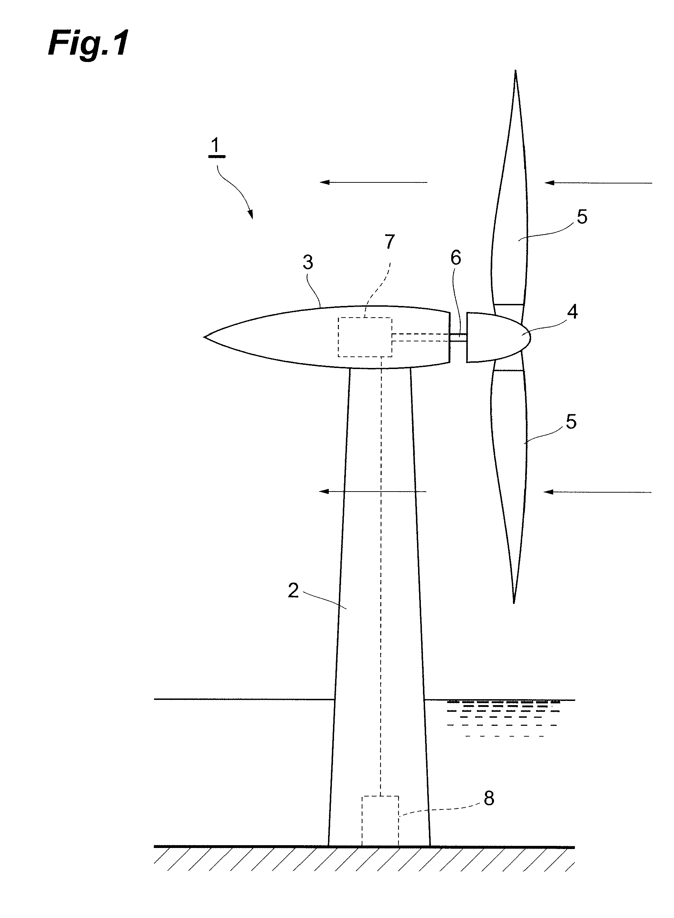

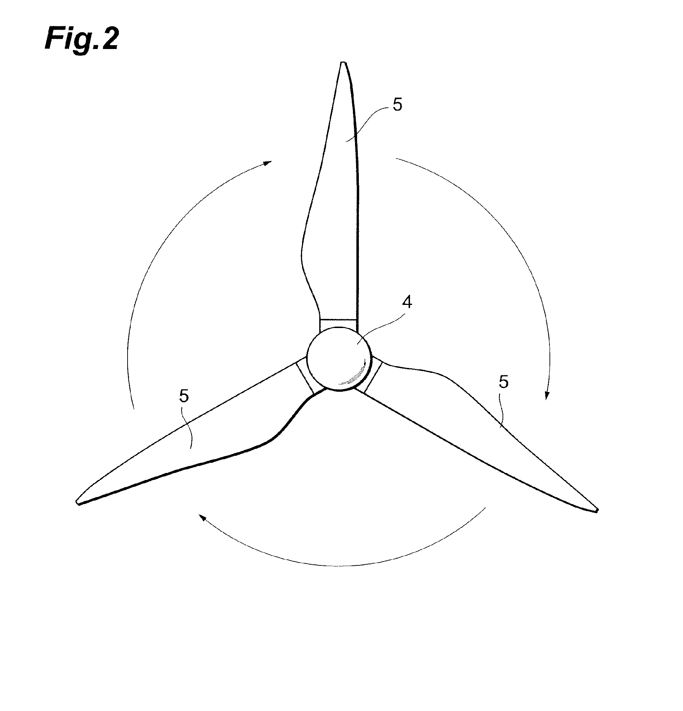

First, an outline of a wind turbine that uses a blade according to the embodiments is described referring to FIG. 1 and FIG. 2. FIG. 1 is an outline configuration diagram that illustrates a wind turbine that uses a blade according to the embodiments. FIG. 2 is a partial enlarged view that shows the wind turbine illustrated in FIG. 1 when viewed from an upstream side.

As shown in FIG. 1 and FIG. 2, a wind turbine 1 includes a tower 2 that is vertically installed on the ocean, a nacelle housing 3 that is connected to the top of the tower 2, a rotor hub 4 that is rotatably connected to a front end of the nacelle housing 3, and three blades 5 that are connected to the rotor hub 4.

The nacelle housing 3 rotatably retains a main shaft 6 that is connected to a rotor shaft of the rotor hub 4. A generator 7 that converts rotational energy of the main shaft 6 into electrical energy is mounted in the nacelle housing 3. Consequently, when the blades 5 receive the wind and cause the rotor hub 4 to rotate, the main shaft 6 rotates and rotational energy of the main shaft 6 is converted to electrical energy by the generator 7 to generate electric power. The generated electric power is accumulated in a current collector apparatus 8 installed at the lower part of the tower 2, and then distributed to various places.

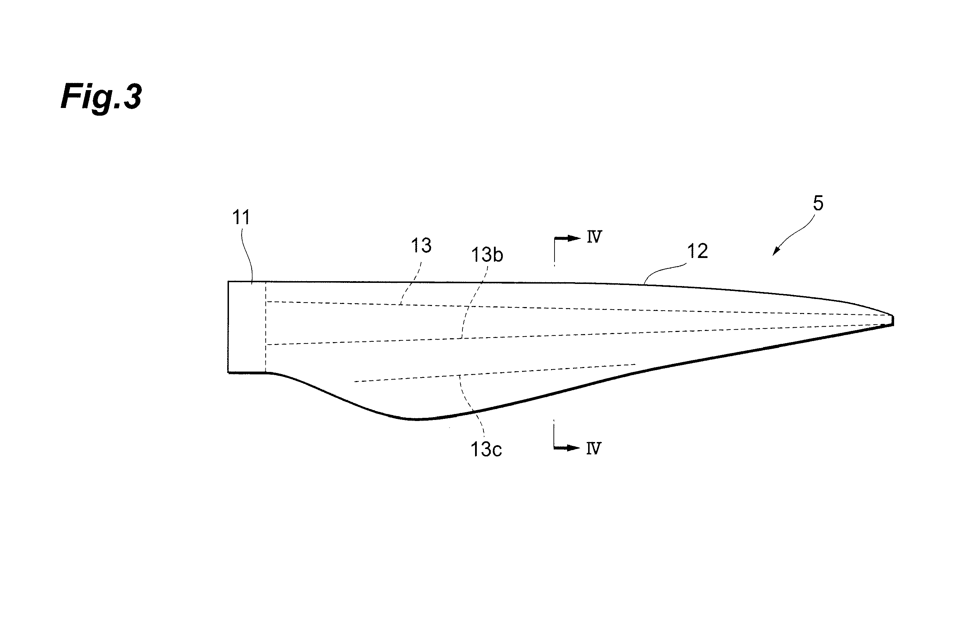

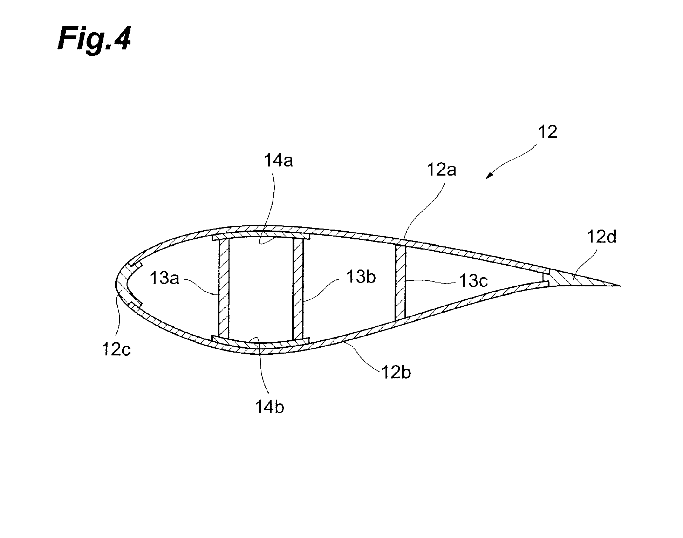

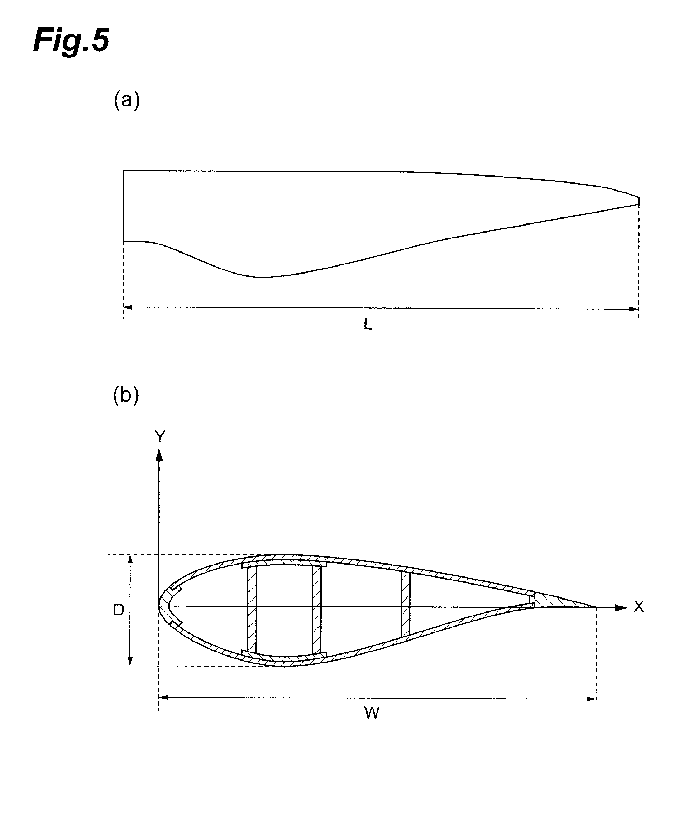

Next, the structure of the blade 5 is described in detail referring to FIG. 3 to FIG. 5. FIG. 3 is a plane view of the blade. FIG. 4 is a cross-sectional view along line IV-IV shown in FIG. 3. FIG. 5 includes views for describing the dimensions of the blade, in which FIG. 5(a) is a plane view of the blade that corresponds to FIG. 3, and FIG. 5(b) is a cross-sectional view of the blade that corresponds to FIG. 4. In FIG. 5(b), the X-axis direction represents the direction of rotation and the Y-axis direction represents the front-to-rear direction.

As shown in FIG. 3 to FIG. 5, the blade 5 is a large-sized blade formed in a wing shape, and a blade length L thereof is 90 meters. The blade 5 includes a root 11 connected to the rotor hub 4, a blade main body 12 that receives wind and obtains a rotary force, three webs 13 that are provided inside the blade main body 12, and girders 14 that connect the web 13 and the blade main body 12.

The root 11 has a concentric cylindrical structure, and has a material thickness that is greater than that of the blade main body 12 in order to secure the connection strength with the rotor hub 4.

The blade main body 12 is formed in a wing shape that obtains a rotary force aerodynamically. The material thickness of the blade main body 12 is thinner than that of the root 11 in order to achieve a light weight. The root 11 (proximal end) side of the blade main body 12 changes from a cylindrical structure to a wing-shaped deformation ellipsoid structure, and a chord W thereof gradually widens. The tip side of the blade main body 12 is a wing-shaped deformation ellipsoid structure, and a chord W thereof gradually narrows. A thickness D of a front portion in the direction of rotation of the blade main body 12 gradually increases to reach a maximum thickness. A thickness D of a rear portion in the direction of rotation of the blade main body 12 gradually decreases, and the tail of the blade extends in a long manner in accompaniment therewith.

The principal components of the blade main body 12 formed in this manner are a front side outer skin 12a and a rear side outer skin 12b that are divided between the upstream side and the downstream side and face each other, a nose portion 12c disposed at the front end portion in the direction of rotation of the front side outer skin 12a and the rear side outer skin 12b, and a tail portion 12d disposed at the rear end portion in the direction of rotation of the front side outer skin 12a and the rear side outer skin 12b. The nose portion 12c and the tail portion 12d are disposed between the front side outer skin 12a and the rear side outer skin 12b. The end surfaces of the front side outer skin 12a and the rear side outer skin 12b are adhered to the nose portion 12c and the tail portion 12d, so that the blade main body 12 forms a wing shape.

The web 13 is formed in an elongated plate shape that extends towards the tip of the blade main body 12. The web 13 is disposed in an approximately perpendicular state with respect to the front side outer skin 12a and the rear side outer skin 12b. One edge thereof is directly or indirectly connected to the front side outer skin 12a, and the other edge is directly or indirectly connected to the rear side outer skin 12b. As a result, the web 13 functions to support the front side outer skin 12a and rear side outer skin 12b that are facing each other and suppress a deformation in the front-to-rear direction of the blade main body 12.

Three of the webs 13 formed in this manner are arranged in parallel along the direction of rotation of the blade main body 12. Of these three webs, two webs 13a and 13b that are disposed at the front side in the direction of rotation of the blade main body 12 are arranged at positions at which the distance between the front side outer skin 12a and the rear side outer skin 12b has become wide. These positions are in the vicinity of the center of the direction of rotation of the blade main body 12. In contrast, a web 13c among the three webs 13 that is disposed on a rear side in the direction of rotation of the blade main body 12 is disposed at a position at which the distance between the front side outer skin 12a and the rear side outer skin 12b has become narrow. This position is towards the rear in the direction of rotation (position in the vicinity of the tail of the blade) of the blade main body 12.

Both edges of the webs 13a and 13b are adhered to the front side outer skin 12a and the rear side outer skin 12b through the girders 14. Both edges of the web 13c are directly adhered to the front side outer skin 12a and the rear side outer skin 12b. A configuration may also be adopted in which the webs 13a to 13c are adhered to the girders 14 or the front side outer skin 12a and rear side outer skin 12b via an unshown bracket member.

Two of the girders 14 form one set that includes a girder 14a that is adherently fixed to one edge of the web 13a and the web 13b and an inner wall of the front side outer skin 12a, and a girder 14b that is adherently fixed to the other edge of the web 13a and the web 13b and an inner wall of the rear side outer skin 12b. The girder 14a is formed in an elongated plate shape that extends from at least one edge of the web 13a to one edge of the web 13b. The girder 14b is formed in an elongated plate shape that extends from at least the other edge of the web 13a to the other edge of the web 13b. Consequently, by adhering the girders 14a and 14b to the two edges of the webs 13a and 13b, the webs 13a and 13b and the girders 14a and 14b form a closed section.

Next, the material of the blade 5 is described.

The root 11 is formed with a PAN-based carbon fiber composite that is obtained by impregnating a resin into PAN (polyacrylonitrile)-based carbon fiber of continuous fiber. Similarly, the front side outer skin 12a, the rear side outer skin 12b, and the web 13 of the blade main body 12 are formed with a PAN-based carbon fiber composite that is obtained by impregnating a resin into PAN-based carbon fiber. The PAN-based carbon fiber is obtained by carbonizing a PAN precursor (polyacrylonitrile fiber), and has a high-strength property with excellent shear strength.

In contrast, the nose portion 12c, the tail portion 12d, and the girders 14 of the blade main body 12 are formed with a pitch-based carbon fiber composite that is obtained by impregnating a resin into pitch-based carbon fiber of continuous fiber. Pitch-based carbon fiber is obtained by baking a pitch precursor (a pitch fiber obtained using coal tar or petroleum heavy oil as a raw material), and has a high modulus.

The tensile modulus of the pitch-based carbon fiber forming the nose portion 12c, the tail portion 12d, and the girders 14 of the blade main body 12 is preferably 400 to 900 GPa from the viewpoint of suppressing deformation of the blade tip, and more preferably is 550 to 750 GPa. The thermal conductivity of the pitch-based carbon fiber is preferably 80 to 700 W/m·K from the viewpoint of diffusing thermal energy at the time of a lightning strike. Further, the volume resistivity of the pitch-based carbon fiber is preferably 1.5 to 7.5 µΩm from the viewpoint of diffusing electrical energy at the time of a lightning strike.

Thus, according to the blade of the present embodiment, by forming the front side outer skin 12a, the rear side outer skin 12b, and the web 13 with a high-strength PAN-based carbon fiber composite, the strength of the blade 5 can be improved. In contrast, by forming the girders 14, the nose portion 12c, and the tail portion 12d with a high modulus pitch-based carbon fiber composite, even if a strong external force acts on the front side outer skin 12a, the rear side outer skin 12b, and the webs 13, the joined state of the front side outer skin 12a, the rear side outer skin 12b, and the webs 13 can be maintained. Consequently, deformation of the blade 5 can be suppressed. In particular, by using a pitch-based carbon fiber composite for the girders 14, deformations that arise in the front-to-rear direction of the blade 5 can be suppressed, and by using a pitch-based carbon fiber composite for the nose portion 12c and the tail portion 12d, deformations that arise in the direction of rotation of the blade 5 can be suppressed. Thus, since the blade 5 can be made a large size because deformations of the blade 5 can be suppressed, it is possible to design the wind turbine 1 to have a high output.

Further, by forming a closed section using the webs 13 and girders 14, the rigidity of the webs 13 and girders 14 can be increased. Thus deformations of the blade 5 can be further suppressed.

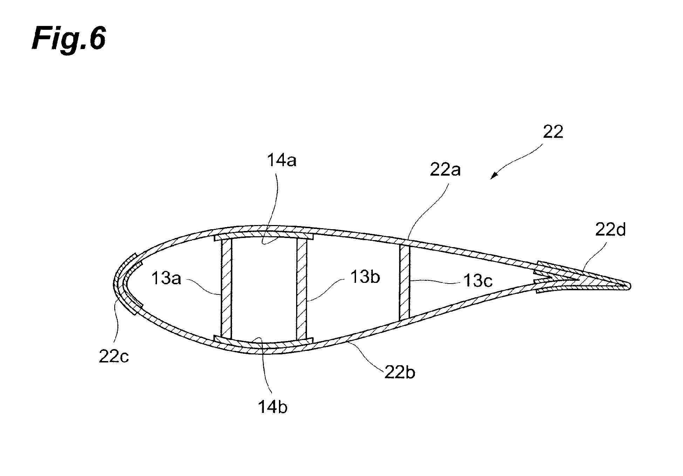

Although a preferred embodiment of the present invention has been described above, it should be understood that the present invention is not limited to the above described embodiment. For example, although according to the above embodiment, the blade main body 12 is formed by disposing the nose portion 12c and the tail portion 12d between the front side outer skin 12a and the rear side outer skin 12b, for example, the blade main body may be formed as illustrated in FIG. 6. In a blade main body 22 illustrated in FIG. 6, the front side outer skin 22a and the rear side outer skin 22b are directly adhered, and a nose portion 22c and a tail portion 22d of a predetermined thickness are layered on the front side outer skin 22a and rear side outer skin 22b that are adhered. In this connection, the nose portion 22c and the tail portion 22d may be layered on either the front surface side or the rear surface side of the front side outer skin 22a and the rear side outer skin 22b, or may be layered on both surface sides of the front side outer skin 22a and the rear side outer skin 22b.

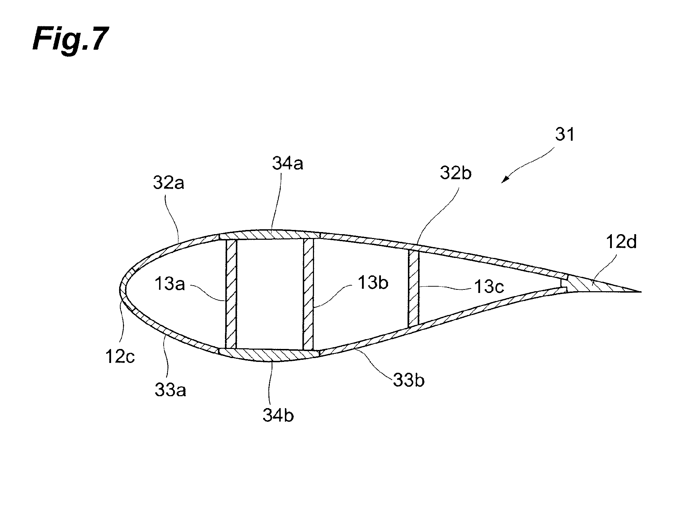

Although according to the above embodiment the blade main body 12 is formed with the front side outer skin 12a, the rear side outer skin 12b, the nose portion 12c, and the tail portion 12d, for example, the blade main body may be formed as illustrated in FIG. 7. In a blade main body 31 illustrated in FIG. 7, the front side outer skin 32 is divided into a first front side outer skin 32a that is at a front portion in the direction of rotation and a second front side outer skin 32b that is at a rear portion in the direction of rotation. Further, the rear side outer skin 33 is divided into a first rear side outer skin 33a that is at a front portion in the direction of rotation and a second rear side outer skin 33b that is at a rear portion in the direction of rotation. A girder 34a is disposed between the first front side outer skin 32a and the second front side outer skin 32b. The girder 34a is adhered to an end surface of the first front side outer skin 32a and the second front side outer skin 32b. Further, a girder 34b is disposed between the first rear side outer skin 33a and the second rear side outer skin 33b. The girder 34b is adhered to an end surface of the first rear side outer skin 33a and the second rear side outer skin 33b. Thus, the blade main body 31 is formed by the front side outer skin 32 that is divided into a first front side outer skin 32a and a second front side outer skin 32b, the rear side outer skin 33 that is divided into a first rear side outer skin 33a and a second rear side outer skin 33b, the nose portion 12c disposed at a front end portion in the direction of rotation of the front side outer skin 32 and the rear side outer skin 33, the tail portion 12d disposed at a rear end portion in the direction of rotation of the front side outer skin 32 and the rear side outer skin 33, the girder 34a disposed between the first front side outer skin 32a and the second front side outer skin 32b, and the girder 34b disposed between the first rear side outer skin 33a and the second rear side outer skin 33b.

Although a covering for the front side outer skin 12a, the rear side outer skin 12b, the nose portion 12c, and the tail portion 12d that form the blade main body 12 was not particularly mentioned according to the above embodiment, a coating agent may be coated on these surfaces. Various materials such as resin or a carbon fiber pre-preg (pre-impregnated) can be used as the coating agent. Thus, by coating the blade main body 12 with a coating agent, unevenness of the blade main body 12 can be eliminated to thereby smooth the flow of wind.

Furthermore, although according to the above embodiment the root 11, the front side outer skin 12a, the rear side outer skin 12b, and the webs 13 are formed with a PAN-based carbon fiber composite, these components may be formed with any kind of material as long as the material is a high-strength material with excellent shear strength. For example, these components may be formed with a glass fiber composite that is obtained by impregnating a resin into a glass fiber.

### [Examples]

Next, examples of the present invention are described. Here, deformation (displacement) of the blade for wind power generation is simulated using two examples and one comparative example.

### [Example 1]

In Example 1, a blade for wind power generation with a blade length of 90 m that has the same structure as the blade 5 according to the above described embodiment is used. A pre-preg obtained by impregnating a resin into phenol carbon fiber with an orientation angle of 45 degrees was used as a PAN-based carbon fiber composite for forming the root, front side outer skin, rear side outer skin, and three webs. Further, a pre-preg obtained by impregnating a resin into DIALEAD (registered trademark of Mitsubishi Plastics Inc.) K63712 manufactured by Mitsubishi Plastics Inc. was used as a pitch-based carbon fiber composite for forming the nose portion, the tail portion, and the two girders. This DIALEAD product has a high modulus, and the tensile modulus thereof is approximately 640 GPa, the tensile strength is approximately 2600 MPa, the breaking elongation is approximately 0.4%, the density is approximately 2.12 g/cm³, the yield is approximately 2000 g/1000 m, the thermal conductivity is approximately 140 W/m·K, and the volume resistivity is approximately 6 to 7 µΩm. Further, the safety factor according to Example 1 was 2.

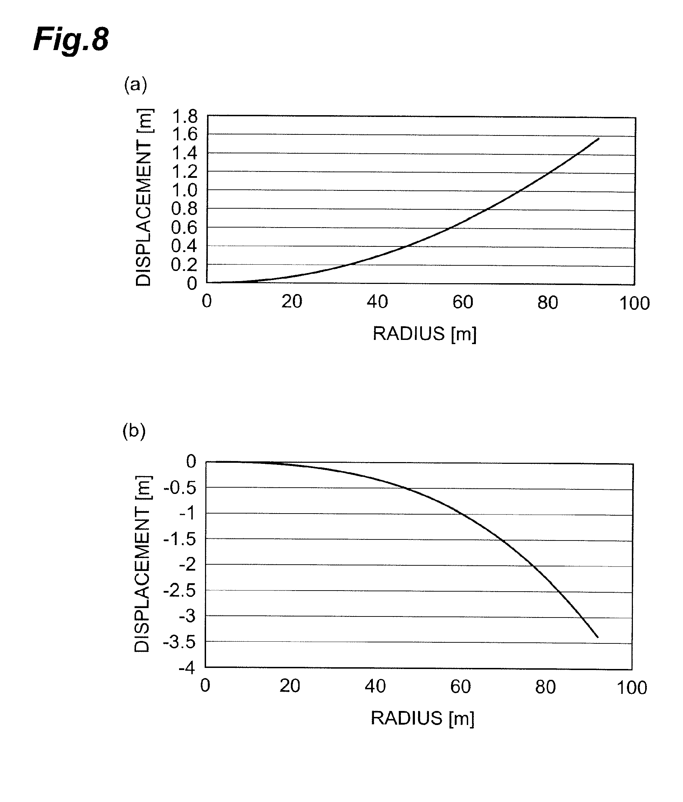

The displacement in the X-axis direction (direction of rotation) and displacement in the Y-axis direction (front-to-rear direction) when the wind speed is 30 m was simulated with respect to Example 1. FIG. 8 includes views that illustrate the simulation results of Example 1, in which FIG. 8(a) shows the displacement in the X-axis direction (direction of rotation) and FIG. 8(b) shows the displacement in the Y-axis direction (front-to-rear direction).

### [Example 2]

For Example 2, a blade for wind power generation with a blade length of 90 m that has the same structure and the same materials as in Example 1 was used. The safety factor according to Example 2 was 3.

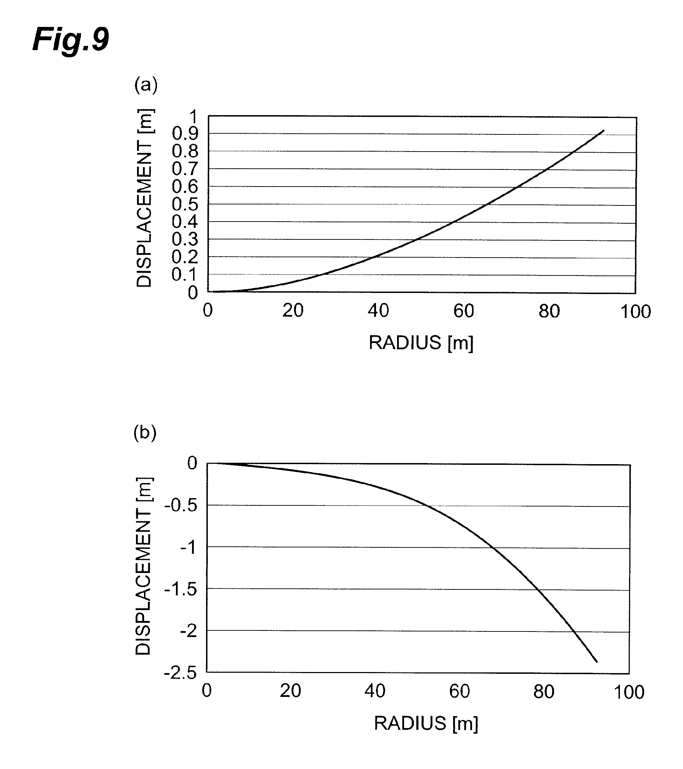

The displacement in the X-axis direction (direction of rotation) and the displacement in the Y-axis direction (front-to-rear direction) when the wind speed is 30 m was simulated with respect to Example 2. FIG. 9 includes views that show the simulation results of Example 2, in which FIG. 9(a) shows the displacement in the X-axis direction (direction of rotation) and FIG. 9(b) shows the displacement in the Y-axis direction (front-to-rear direction).

### [Comparative Example 1]

For Comparative Example 1, a blade for wind power generation with a blade length of 90 m and the same structure as in Example 1 was used. A glass fiber composite was used as the material of the entire blade for wind power generation.

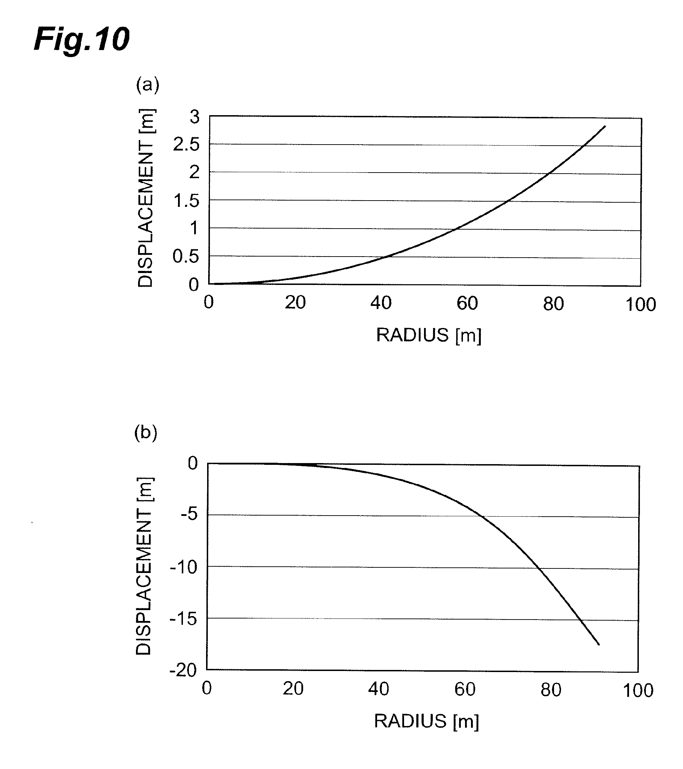

The displacement in the X-axis direction (direction of rotation) and the displacement in the Y-axis direction (front-to-rear direction) when the wind speed is 30 m was simulated with respect to Comparative Example 1. FIG. 10 includes views that illustrate the simulation results of Comparative Example 1, in which FIG. 10(a) shows the displacement in the X-axis direction (direction of rotation) and FIG. 10(b) shows the displacement in the Y-axis direction (front-to-rear direction).

As shown in FIG. 8 to FIG. 10, it was found that in Examples 1 and 2 deformations decreased in both the direction of rotation and the front-to-rear direction compared to Comparative Example 1. Based on these simulation results it was clarified that deformations in the direction of rotation and the front-to-rear direction are significantly reduced by forming the nose portion, the tail portion, and the girders with a pitch-based carbon fiber composite.

### Description of Symbols

1 ... wind turbine, 2 ... tower, 3 ... nacelle housing, 4 ... rotor hub, 5 ... blade, 6 ... main shaft, 7 ... generator, 8 ... current collector apparatus, 11 ... root, 12 ... blade main body, 12a ... front side outer skin, 12b ... rear side outer skin, 12c ... nose portion, 12d ... tail portion, 13 ... web, 13a ... web, 13b ... web, 13c ... web, 14 ... girder, 14a ... girder, 14b ... girder, 22 ... blade main body, 22a ... front side outer skin, 22b ... rear side outer skin, 22c ... nose portion, 22d ... tail portion, 31 ... blade main body, 32 ... front side outer skin, 32a ... first front side outer skin, 32b ... second front side outer skin, 33 ... rear side outer skin, 33a ... first rear side outer skin, 33b ... second rear side outer skin, 34a ... girder, 34b ... girder, L ... blade length, W ... chord, D ... thickness

## Claims

1. A blade for wind power generation that is attachable to a rotor hub, comprising:
a wing-shaped outer skin;
a web that is provided inside the outer skin and extends towards a tip of the blade;
a pair of girders that are adhered to both edges of the web and are adhered to the outer skin;
a nose portion provided at a front end portion in a direction of rotation of the outer skin; and
a tail portion provided at a rear end portion in the direction of rotation of the outer skin;
wherein the girders, the nose portion, and the tail portion are formed with a pitch-based carbon fiber composite that is obtained by impregnating a resin into a pitch-based carbon fiber.

2. The blade for wind power generation according to claim 1, wherein the outer skin and the web are formed with a PAN-based carbon fiber composite that is obtained by impregnating a resin into a PAN-based carbon fiber.

3. The blade for wind power generation according to claim 1, wherein the outer skin and the web are formed with a glass fiber composite that is obtained by impregnating a resin into a glass fiber.

4. A wind turbine that uses a blade for wind power generation according to any one of claims 1 to 3.
